# EUROPÄISCHE PATENTSCHRIFT

(11) **EP 4 511 303 B1**
(45) Veröffentlichungstag und Bekanntmachung des Hinweises auf die Patenterteilung: **10.06.2026**
(21) Anmeldenummer: 23719312.3
(22) Anmeldetag: 06.04.2023
(51) Int. Cl.: B65H 75/44, H02G 11/02

(54) **AUFWICKELEINHEIT FÜR EIN KABEL**
WINDING UNIT FOR A CABLE
UNITÉ D'ENROULEMENT POUR UN CÂBLE

(30) Priorität: 19.04.2022 DE 102022109465
(43) Veröffentlichungstag der Anmeldung: 26.02.2025
(73) Patentinhaber: Winding Concepts GmbH, 47807 Krefeld (DE)
(72) Erfinder: Doppler, Günther, 3400 Klosterneuburg (AT)
(74) Vertreter: LifeTech IP Spies & Behrndt Patentanwälte PartG mbB
(86) Internationale Anmeldenummer: PCT/EP2023/059230
(87) Internationale Veröffentlichungsnummer: WO 2023/202896

(56) Entgegenhaltungen:
- WO-A1-2013/008329
- WO-A1-2017/216454
- DE-A1- 102011 080 083
- DE-A1- 102011 080 085

## Beschreibung

### HINTERGRUND

Die Erfindung betrifft eine Kabeltrommel und insbesondere eine Aufwickeleinheit für ein Kabel, welches beispielsweise zum Laden für ein Fahrzeug einsetzbar ist.

Die zunehmende Elektromobilität stellt ganz besondere Anforderungen an die erforderliche Infrastruktur. Das gilt nicht nur für eine ausreichend hohe Anzahl von Ladestationen, die an ein ausreichend dimensioniertes Energienetz angeschlossen sein müssen, sondern auch für ganz alltägliche und praktische Fragestellungen, zum Beispiel der Handhabung von individuellen Ladekabeln für einzelne Fahrzeuge.

In aller Regel liefern die Hersteller hierfür zusammen mit den Fahrzeugen Ladekabel aus, welche quasi lose zusammengelegt im Kofferraum, in der eigenen Garage oder in anderen Stauräumen des Fahrzeuges Platz finden. Wenn dann das Ladekabel zum Laden des Fahrzeuges an einem öffentlichen Ladepunkt hervorgeholt wird, wird es sowohl mit der einen Seite bzw. dem dort vorgesehenen Stecker mit dem Fahrzeug und auf der anderen Seite mit der Ladesäule verbunden. Ein Großteil des Kabels liegt dann üblicherweise auf dem Boden, d.h., auf der Straße, dem Gehweg, einem Parkplatz und im besten Fall auf dem Garagenboden. Gerade bei schlechtem Wetter, bei Regen, Schnee oder Matsch wird das Kabel nass und dreckig und muss dann nach dem Ladevorgang in diesem Zustand von Hand aufgewickelt werden, was nicht nur unangenehm ist, sondern auch hygienisch fragwürdig ist, da eine große Gefahr für die Verschmutzung der eigenen Kleidung bzw. der Hände potentiell hoch ist. Eine wirklich praktikable und alltagstaugliche Lösung für eine derartig unpraktische Handhabung von Ladekabeln ist derzeit von den Herstellern nicht vorgesehen.

Zwar gibt es eine ganze Reihe von Kabeltrommeln, die sich zum Aufwickeln von Elektrokabeln eigenen. So beschreibt beispielsweise das Dokument DE 10 2009 046 327 A1 eine Vorrichtung zur elektrischen Verbindung eines Elektrofahrzeuges mit einer Stromzapfstelle. Dabei ist auch ein Kabel auf einer Wickelvorrichtung erwähnt, welche über zwei Zahnräder angetrieben wird. Die eine Seite des Kabels wird in üblicher Weise wie bei einer normalen Kabeltrommel in einem vergleichsweise breiten Bereich aufgewickelt, während das andere Ende aus einem zentralen Bereich der Kabeltrommel austritt. Hierbei ergibt sich eine Reihe von Problemen, die insbesondere die Strompfadführung betreffen. Da das lange Ende des Kabels die Kabeltrommel beim Abwickeln bzw. Aufwickeln dreht, muss dem Übergang auf einen nicht drehenden Teil - d.h. auf den Teil des Kabels, der an zentraler Stelle austritt - besondere Aufmerksamkeit gewidmet werden. Hierfür kommen in aller Regel nur Schleifkontakte in Betracht. Durch die zu übertragende elektrische Leistung, die erforderlich ist, um ein Elektrofahrzeug aufzuladen, ergeben sich allerdings eine ganze Reihe von Problemen bei der Energieübertragung durch Schleifkontakte.

Eine andere Lösung ist in dem Dokument DE 10 2011 080 085 A1 beschrieben. Auch diese Anmeldung betrifft eine Kabeltrommel insbesondere für ein Elektrofahrzeug, wobei das Kabel um einen Wickelkern herum aufgewickelt oder entsprechend abgewickelt werden kann. Hierdurch werden Schleifkontakte vermieden und das Kabel kann einstückig in der Kabeltrommel gehalten werden. Allerdings ist gemäß diesem Dokument auch vorgesehen, dass ein Teil des Kabels aus dem zentralen Bereich der Kabeltrommel austritt. Dieser kann daher nicht für eine Achse und Lagerung der schweren Kabeltrommel genutzt werden. Außerdem ist es erforderlich, dass der innere Teil und der äußere Teil der Kabelwicklung übereinander liegen, wodurch die geometrischen Dimensionen der Kabeltrommel sehr groß werden und in einem Fahrzeug sehr viel von dem vorhandenen knappen Stauraum verbraucht.

Im oben genannten Kontext gibt es auch noch weitere Ansätze. Das Dokument DE 10 2011 080083 A1 beschreibt eine Kabeltrommel insbesondere für ein Elektrofahrzeug mit einem in der Kabeltrommel gelagerten oder lagerbarem Elektrokabel einer Transporteinrichtung für einen Transport des Elektrokabels zwecks Lagerung in der Kabeltrommel und einer Kabelführung. Außerdem beschreibt das Dokument WO 2017 / 213 454 A1 eine tragbare Vorrichtung aus dem ein elektrische Kabel herausführt, welches insbesondere zum Laden für ein elektrisches Fahrzeug nutzbar ist. An beiden Seiten des Kabels sind Verbinder vorgesehen, und das Kabel ist als flache Spirale aufgewickelt.

Es besteht daher weiterhin ein Bedarf für eine Vorrichtung zum Aufwickeln und Verstauen von Ladekabeln für Elektrofahrzeuge, welche die bekannten Nachteile der traditionell eingesetzten Technik überwindet, kompakt ist und darüber hinaus noch Voraussetzungen für weitere Verbesserungen des täglichen Umgangs ermöglicht.

Dieser Erfindung liegt daher die Aufgabe zu Grunde, eine Aufwickelvorrichtung vorzustellen, welche nicht durch die Nachteile der bisherigen Ladekabel für Elektrofahrzeuge belastet ist und insbesondere eine leicht handhabbare, alltagstaugliche Bauart aufweist.

### KURZBESCHREIBUNG DER ERFINDUNG

Die oben genannte Aufgabe wird durch die Gegenstände der unabhängigen Patentansprüche gelöst. Vorteilhafte Ausführungsformen der vorliegenden Erfindung sind durch die abhängigen Ansprüche beschrieben.

Gemäß einem Aspekt der vorliegenden Erfindung wird eine Aufwickeleinheit für ein Kabel vorgestellt. Es kann zum Laden für ein Elektrofahrzeug geeignet sein. Die Aufwickeleinheit weist dabei eine rotationssymmetrische Wickeleinheit auf, die drehbar um eine Achse gelagert ist. Außerdem ist ein rotationssymmetrischer Innenkörper vorhanden, der fest mit der Achse verbunden ist. Weiterhin ist eine rotationssymmetrische Austrittsronde vorgesehen, die drehbar um die Achse gelagert ist. Dabei weist die Wickeleinheit einen ersten Wickelbereich einer ersten Breite auf, sodass ein Kabel in den ersten Wickelbereich von einem Bereich nahe der Achse übereinander aufwickelbar ist. Die Wickeleinheit weist auch einen zweiten Wickelbereich in einem radialen Peripheriebereich der Wickeleinheit auf, wobei der zweite Wickelbereich angrenzend an den ersten Wickelbereich angeordnet ist und eine zweite Breite aufweist, sodass ein Kabel in dem zweiten Wickelbereich übereinander entgegengesetzt zu einer Wickelrichtung im ersten Wickelbereich aufwickelbar ist.

Die Austrittsronde ist um eine vorgegebene Anzahl von Umdrehungen zusammen mit der Wickeleinheit drehbar und dann blockierbar, sodass ein Kabel infolge einer Weiterdrehung der Wickeleinheit aus einer Austrittsöffnung in einem radial peripheren Bereich der Austrittsronde in Höhe des zweiten Wickelbereiches herausschiebbar ist.

Die vorgestellte Kabeltrommel weist eine Reihe von technischen Effekten und Vorteilen und Verbesserungen auf: Gegenüber traditionellen Kabeltrommeln ist sowohl der lange Teil des Kabels auf der einen Seite der Aufwickeleinheit als auch der andere, kurze Teil des Kabels individuell konfigurierbar und in keiner Weise von der Länge der anderen Seite des Kabels abhängig. Dies wird durch die spezielle Form im Inneren der Aufwickeleinheit und die Kabelführung erreicht.

Dadurch, dass sich die rotationssymmetrische Austrittsronde teilweise frei zusammen mit der Wickeleinheit drehen kann, andererseits aber, nach einer bestimmten Anzahl von Drehungen (oder Teilen davon) der Wickeleinheit blockiert werden kann, können sich beide Einheiten - insbesondere die Wickeleinheit und die Austrittsronde - teilweise gemeinsam und teilweise erzwungenermaßen nicht gemeinsam drehen. Auf diese Weise kann erreicht werden, dass ein Ende des Kabels aus einer Öffnung der Austrittsronde herausgeschoben wird. Hierbei handelt es sich in aller Regel um den kürzeren Teil des Kabels. Dabei ist auch anzumerken, dass das Kabel sich nicht in einem Zentralbereich aus der Austrittsronde herausschieben muss, sondern eher in einem peripheren Bereich derselben.

Dies kann dadurch erreicht werden, dass die beiden Wickelbereiche, die in der Wickeleinheit vorgesehen sind, unterschiedlich gestaltet sind. Der zweite Wickelbereich befindet sich eher in einem peripheren Bereich der Wickeleinheit angrenzend an die Austrittsronde. Eine Verbindung zwischen dem ersten und dem zweiten Wickelbereich wird durch ein Kabelübergangsstück von dem ersten Wickelbereich zu dem zweiten Wickelbereich erreicht. Das Kabelübergangsstück wird im Inneren der Aufwickeleinheit zwischen dem ersten Wickelbereich und dem Innenkörper geführt. Außerdem sind die beiden Enden des Kabels in der Wickeleinheit gegenläufig aufgewickelt.

Ein Bediener kann nun das lange Ende des Kabels von dem ersten Wickelbereich durch ein einfaches Ziehen an dem Kabel abwickeln; alternativ kann der optional vorhandene motorische Antrieb genutzt werden. Dabei dreht sich die Austrittsronde zusammen mit der Wickeleinheit, bis eine vorgegebene Anzahl von Umdrehungen (oder Teilen davon) erreicht ist. Dann wird die Austrittsronde blockiert - insbesondere gegenüber einem stationären Teil wie zum Beispiel einem Gehäuse der Aufwickeleinheit, gegenüber dem sich die Wickeleinheit weiterhin dreht - sodass das typischerweise kürzere Kabelende aus der Austrittsöffnung der Austrittsronde automatisch herausgeschoben wird. Die in der Austrittsronde vorgesehene Öffnung im zweiten Wickelbereich erstreckt sich dabei über die gesamte Höhe der radial übereinander liegenden Wicklungen des Kabels. Das Kabel kann über eine Führung kontrolliert aus der Austrittsronde austreten. Ein geordnetes Aufwickeln und das Abwickeln des Kabels im zweiten Wickelbreich kann durch eine schneckenförmige Führungsstruktur im zweiten Wickelbereich sichergestellt werden, sodass das Kabel im zweiten Wickelbereich sicher radial geführt wird. Hierdurch kann ein gewolltes und kontrolliertes Herausschieben des Kabels erreicht werden. Einem Benutzer wird also das zweite Kabelende automatisch zur Verfügung gestellt.

Dadurch, dass sich im Innern der Wickeleinheit ein Antrieb - zum Beispiel ein elektrischer Antrieb - befinden kann, werden in einer ersten Aufwickelphase sowohl das kurze Ende in dem zweiten Wickelbereich aufgewickelt während sich die Austrittsronde nicht mit der Wickeleinheit zusammen dreht, als auch das lange Ende in dem ersten Wickelbereich aufgewickelt.

In einer zweiten Aufwickelphase - insbesondere nachdem das kurze Ende des Kabels bereits aufgewickelt wurde - dreht sich die Austrittsronde zusammen mit der Wickeleinheit, wobei nun das lange Ende des Kabels in dem ersten Wickelbereich komplett aufgewickelt wird. Damit sind beide Kabelenden optimal und automatisch - durch den elektrischen Antrieb im Inneren der Wickeleinheit - aufgewickelt.

Außerdem sind alle Elemente der Aufwickeleinheit in ein Gehäuse integrierbar, sodass sich eine insgesamt sehr kompakte Einheit ergibt, die leicht in einem Fahrzeug oder an einem anderen Ort verstaubar ist. Die vorgeschlagene Aufwickeleinheit kann also sowohl stationär wie auch mobil betrieben werden.

Zusätzlich ist es leicht möglich, sowohl an der Austrittsöffnung als auch in dem Bereich, in dem das lange Kabelende in den ersten Wickelbereich eintritt, jeweils eine Reinigungseinheit für das Kabel vorzusehen. Auf diese Weise wird es möglich, dass das Kabel immer in einem sauberen Zustand in der Aufwickeleinheit aufgewickelt wird, ohne dass ein Benutzer das Kabel mit der Hand berühren oder säubern muss. Der Benutzer muss lediglich die Stecker sowohl aus dem Fahrzeug als aus der Ladeeinheit herausziehen und jeweils auf den Boden legen. Das Aufwickeln kann durch die Aufwickeleinheit komplett autonom durchgeführt werden, nachdem der Aufwickelvorgang - zum Beispiel elektrisch - ausgelöst wurde.

Dadurch, dass die Austrittsronde nach einer konfigurierbaren Anzahl von Umdrehungen blockiert werden kann, kann auch gewährleistet werden, dass das Kabel aus dem ersten Wickelbereich nahezu komplett ausgewickelt ist, bevor das Kabel aus dem zweiten Wickelbereich herausgeschoben werden kann. Dadurch kann das Kabel erst angeschlossen werden, wenn die komplette Länge abgewickelt ist. Eine thermische Überlastung des Kabels kann so gezielt verhindert werden.

Der optionale motorische Antrieb bietet den Vorteil, dass die Kabeltrommel nicht - wie für einen manuellen "Kurbelbetrieb" praktikabel - auf "Bauchhöhe" angehoben und gehalten werden muss. Vielmehr kann sie mit wenig Kraftaufwand am ausgestreckten Arm den Wickelvorgang automatisch ausführen.

Außerdem kann durch einen Verbau aller elektrischen / elektronischen Komponenten im statischen Innenkörper ein sehr guter Schutz gegen Schädigungen durch Schmutz, insbesondere Wasser gewährleistet werden. Ergänzend sei auch erwähnt, dass die Aufwickeleinheit trotz ihrer eleganten Funktion sehr kompakt realisiert werden kann, das das Kabel sowohl im ersten wie auch im zweiten Wickelbereich von der Achse auch betrachtet jeweils einlagig übereinander gewickelt werden kann.

Im Folgenden werden weitere Ausführungsbeispiele der Aufwickeleinheit beschrieben:

Gemäß einer erweiterten Ausführungsform der Aufwickeleinheit kann ein Kabel mit einem Kabeldurchmesser vorhanden sein, das sich von dem ersten Wickelbereich zwischen diesem und dem Innenkörper in den zweiten Wickelbereich und aus der Austrittsöffnung erstreckt. Die Kabelenden können mit Steckern versehen sein. Durch das Vorhandensein des Kabels wird die Aufwickeleinheit für den praktischen Einsatz konfektioniert. Dadurch, dass das Kabel durch dafür vorgesehene Schlitze in die Aufwickeleinheit bzw. die beiden Wickelbereiche einführbar ist, können die Aufwickeleinheit und das Kabel von unterschiedlichen Quellen erworben werden. Außerdem kann ein bereits vorhandenes Kabel durch die Aufwickeleinheit handhabbarer gemacht und aufgewertet werden. Dabei wird davon ausgegangen, dass die Aufwickeleinheit nicht mit dem Kabel zusammen ausgeliefert werden muss. Es können also auch vorhandene Ladekabel für Elektrofahrzeuge nachträglich mit der Aufwickeleinheit ausgerüstet werden.

Gemäß einer erweiterten Ausführungsform der Aufwickeleinheit kann das Kabel in einem aufgewickelten Zustand mit einem ersten Abschnitt in dem ersten Wickelbereich aufgewickelt sein und mit seinem zweiten Abschnitt auf den zweiten Wickelbereich gegenläufig aufgewickelt sein. Dabei ist zu berücksichtigen, dass sich ein dritter kurzer Abschnitt (d.h. ein Übergangsstück, welches unterhalb des zweiten Wickelbereiches liegen kann) zwischen dem ersten Abschnitt und dem zweiten Abschnitt des Kabels im Innern der Aufwickeleinheit befindet und hier quasi seine Wickelumkehrung erfährt.

Gemäß einer vorteilhaften Ausführungsform der Aufwickeleinheit kann der erste Abschnitt länger als der zweite Abschnitt sein. Auf diese Weise kann beispielsweise die Aufwickeleinheit direkt neben dem Fahrzeug bzw. der Ladebuchse des Fahrzeuges stehen, während das lange Ende des Kabels mit der Ladesäule oder dem Ladepunkt an einem entfernteren Platz verbunden werden kann.

Gemäß einer weiteren Ausführungsform der Aufwickeleinheit kann die erste Breite - insbesondere des ersten Wickelbereiches - dem Kabeldurchmesser plus einer Toleranzbreite, die kleiner als die Kabelbreite ist, entsprechen. Damit wird sichergestellt, dass sich das Kabel Lage für Lage in den ersten Wickelbereich aufwickeln kann, ohne dass es sich in dem ersten Wickelbereich verklemmen kann. Die Windungen des Kabels liegen dann im Wesentlichen übereinander.

Gemäß einer alternativen Ausführungsform der Aufwickeleinheit kann die erste Breite - insbesondere des ersten Wickelbereiches - breiter als der Kabeldurchmesser sein. In diesem Fall kann das Kabel auch in mehreren Kabelbreiten nebeneinander in dem ersten Wickelbereich aufgewickelt sein und danach erst in eine nächste Wickelebene übergehen. Vorteilhafterweise würde die Wickeleinheit aber nicht mehr als 2 bis 3 Kabelbreiten breit sein, um ein geordnetes Aufwickeln des Kabels zu ermöglichen. Die Wicklungen des Kabels liegen dann sowohl nebeneinander als auch übereinander. Auf diese Weise kann trotz kompakter Bauform in dem ersten Wickelbereich ein längerer Kabelabschnitt aufgewickelt sein. Damit werden auch etwas entferntere Ladepunkte erreichbar.

Gemäß einer sinnvollen Ausführungsform der Aufwickeleinheit kann die zweite Breite - insbesondere des zweiten Wickelbereiches - mindestens dem Kabeldurchmesser entsprechen. Die zweite Breit sollte auch nicht viel breiter sein, als die Kabeldicke, damit das Kabel im zweiten Wickelbereich zwangsweise - bei einer entsprechenden Länge - durch die spiralförmige Führung übereinander (aus axialer Sicht) zu liegen kommt. Außerdem ist die Breite oder Dicke der schneckenförmigen Führung zu berücksichtigen.

Gemäß einer weiteren vorteilhaften Ausführungsform der Aufwickeleinheit kann das Kabel für eine Stromleistung von mindestens 11 kW ausgelegt sein. Außerdem ist eine Auslegung für eine höhere Lade- bzw. Stromleistung möglich. Damit lassen sich verschiedene Standards bei Elektrokabeln für das Aufladen von Elektrofahrzeugen mit der vorgeschlagenen Aufwickeleinheit aufwickeln.

Gemäß einer erweiterten Ausführungsform der Aufwickeleinheit kann der Kabeldurchmesser mindesten 11mm oder mehr - insbesondere 13mm - betragen. Außerdem sind einphasige Kabel mit drei Leitern oder 3-Phasenkabel mit z.B. fünf Leitern einsetzbar.

Gemäß einer besonders vorteilhaften Ausführungsform der Aufwickeleinheit kann die Wickeleinheit drehbar auf dem ersten Bereich des Innenkörpers gelagert sein. Damit wird dieser Teil des Innenkörpers ein Lager- bzw. Drehbereich für die Wickeleinheit. Typischerweise ist der Innenkörper fest mit einem Gehäuse verbunden.

Deshalb und gemäß einem weiteren Ausführungsbeispiel der Aufwickeleinheit kann der Innenkörper hohl sein und eine Rotationsantriebseinheit für die Aufwickeleinheit aufweisen. Auf diese Weise kann die Wickeleinheit ohne manuelle Anstrengung angetrieben werden. Dafür können sich im Inneren des Innenkörpers ein elektrischer Motor und eine Stromversorgung - beispielsweise ein Akku oder ein Netzteil - sowie eine elektrische und/oder elektronische Steuereinheit befinden.

Dementsprechend, und gemäß einem weiteren Ausführungsbeispiel der Aufwickeleinheit, kann die Rotationsantriebseinheit den Elektromotor aufweisen, der die Wickeleinheit gegenüber dem Innenkörper antreibt.

Vorteilhafter Weise kann gemäß einem ergänzenden Ausführungsbeispiel der Aufwickeleinheit der Motor von außerhalb des Innenkörpers schaltbar sein. Dies kann beispielsweise durch einen Schalter am Gehäuse der Aufwickeleinheit, einen Schlüsselschalter oder ähnlich erfolgen. Durch einen Schlüsselschalter kann auch erreicht werden, dass unbefugte den Antrieb nicht in Gang setzen.

Außerdem kann gemäß einem zusätzlichen Ausführungsbeispiel der Aufwickeleinheit der Motor ferngesteuert schaltbar sein. Dies kann über eine Funkfernsteuerung, über eine NFC-Verbindung (Near Field Communication), eine Bluetooth-Verbindung, WLAN oder ähnlich erfolgen.

Gemäß einem weiteren eleganten Ausführungsbeispiel der Aufwickeleinheit kann eine Verriegelung zwischen der Austrittsronde und/oder der Wickeleinheit und/oder dem Innenkörper elektromagnetisch aus dem Innenkörper auslösbar sein. Auf diese Weise lässt sich die Austrittsronde nach der vorkonfigurierten Anzahl von Umdrehungen gegenüber dem Innenkörper bzw. dem Gehäuse festsetzen, sodass sich nur die Wickeleinheit weiter um den Innenkörper drehen kann, sodass das typischerweise kurze Kabelende aus dem zweiten Wickelbereich durch die Austrittsöffnung herausgeschoben wird.

Alternativ kann die Verriegelung zwischen der Austrittsronde und der Wickeleinheit und/oder dem Innenkörper mechanisch auslösbar sein.

Entsprechend einem weiteren praktischen Ausführungsbeispiel der Aufwickeleinheit können zusätzlich eine erste Reinigungseinheit im Bereich der Austrittsöffnung und/oder eine zweite Reinigungseinheit im Bereich des ersten Wickelbereiches vorhanden sein. Das Kabel würde dann jeweils an diesen Reinigungsbereichen vorbei oder durch sie hindurch laufen, wodurch es gereinigt werden würde. Somit würde sich im Inneren der Aufwickeleinheit immer ein sauberes Kabel befinden. Die Reinigungseinheit kann auch mit dem Führungsrahmen kombiniert sein.

Weiterhin kann gemäß einer Ausführungsform der Aufwickeleinheit vorgesehen sein, dass das Kabel mit montierten Steckern an den beiden Enden in den ersten Wickelbereich, zwischen dem ersten Wickelbereich und dem Innenkörper, in den zweiten Wickelbereich und aus der Austrittsöffnung durch jeweilige Schlitze in der Wickeleinheit und der Austrittsronde einlegbar ist. Auf diese Weise ließen sich die Aufwickeleinheit und das Kabel von unterschiedlichen Quellen beziehen. Auch ein bereits vorhandenes Kabel ließe sich so mit der vorgeschlagenen Aufwickeleinheit verbinden, ohne dass einer oder beide Stecker demontiert werden müssten.

Eine ergänzende Ausführungsform der Aufwickeleinheit kann vorsehen, dass zusätzlich ein Gehäuse mit Öffnungen für die beiden Enden des Kabels vorgesehen ist, von dem mindestens die Wickeleinheit umschlossen werden würde. Außerdem könnte das Gehäuse für einen sicheren Stand der Wickeleinheit auf dem Boden sorgen.

Eine weitere vorteilehafte Ausführungsform der Aufwickeleinheit kann vorsehen, dass sich die Austrittsöffnung in der Ronde über eine gesamte Breite von übereinander liegenden Windungen des Kabels (aus axialer Blickrichtung) im zweiten Wickelbereich erstreckt. Blickt man durch die Austrittsöffnung, zeigen sich die Windungen des Kabels nebeneinander liegend. Hierdurch kann - im Zusammenwirken mit einer schneckenförmigen Führung - erreicht werden, dass das Kabel problemlos im zweiten Wickelbereich auf- und abwickelbar ist und sich keine Wickelengpässe wie bei einer zu kleinen Öffnung ergeben.

Vorteilhaft ist es auch, wenn sich eine Ausgleiteinheit in oder in der Nähe der Austrittsöffnung befinden kann. Hierdurch kann das Kabel sicher geführt werden.

Ergänzend sei erwähnt, dass gemäß einer weiteren Ausführungsform der Aufwickeleinheit die Ausgleiteinheit aus mindestens einer ersten Rolle besteht. Diese kann sich an der Stelle befinden, an der das Kabel durch die Öffnung in der Austrittsronde die Ebene der Austrittsronde durchstößt. Eine Achse der Rolle würde damit in etwa senkrecht oder genau senkrecht auf der Achse der Wickeleinheit stehen und sich in einem seitlichen Bereich der Austrittsöffnung befinden. Auch auf der gegenüberliegenden Seite der Austrittsöffnung in Bezug auf die erste Rolle kann sich eine zweite Rolle befinden. Das Kabel würde beim Austritt aus der Austrittsöffnung also jeweils auf der oberen und unteren Seite durch die zweite und die erste Rolle geführt werden. Idealerweise erstreckt sich die Rolle über die gesamte Höhe der Austrittsöffnung in der Austrittsronde.

Eine alternative und vorteilhafte Ausführungsform der Wickeleinheit weist im Bereich der Austrittsöffnung einen Führungsrahmen auf einer Außenseite der Austrittsronde auf, durch den sich das Kabel erstreckt. Auch hierdurch kann eine saubere Führung des Kabels beim abwickeln bzw. aufwickeln von bzw. in den zweiten Wickelbereich ermöglicht werden. Der Führungsrahmen kann auch in Form der Reinigungseinheit ausgeführt werden oder mit dieser kombiniert sein.

Weiterhin vorteilhaft wäre der Führungsrahmen gemäß einer weiteren Ausführungsform in einem Schlitz in der Austrittsronde verschiebbar ist.

Eine weitere gut funktionierende Ausführungsform der Aufwickeleinheit kann vorsehen, dass der zweite Wickelbereich eine schneckenförmige Führung aufweist, in der das Kabel aufwickelbar ist. Diese schneckenförmige Führung erweist sich als vorteilhaft, um das Kabel in dem zweiten Wickelbereich gezielt und kontrolliert aus der Öffnung der Austrittsronde austreten zu lassen.

Entsprechend einer weiteren Ausführungsform der Aufwickeleinheit wäre es elegant, wenn eine Führungsvorrichtung des Führungsrahmens, der sich in den zweiten Wickelbereich hinein erstreckt, den Führungsrahmen durch die schneckenförmige Führung im Schlitz bei einer Drehung des zweiten Wickelbereiches bewegt.

Weiterhin kann der Führungsrahmen gemäß einer ergänzenden Ausführungsform mindestens eine zweite Rolle aufweisen. Hierdurch wird eine saubere Führung des Kabels gewährleistet. Als zusätzlich vorteilhaft hat es sich erwiesen, wenn eine oder beide Rollen des Führungsrahmen in ihrer jeweiligen Längsrichtung einen konkaven Querschnitt aufweist/aufweisen. Auch dies kommt einer sauberen Kabelführung zugute.

Ergänzend kann die Aufwickeleinheit zusätzlich eine Abdeckung aufweisen, die sich über die Austrittsöffnung und den Führungsrahmen erstreckt. Ergänzend kann der Führungsrahmen auch über eine zusätzliche (obere) Führung in der Abdeckung kontrolliert verschiebbar sein. Dies gewährleistet einen Schutz für die Austrittsöffnung und für den Führungsrahmen.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnungen dieser Anmeldung sind lediglich als schematisch und als nicht maßstabsgetreu anzusehen.

### KURZE BESCHREIBUNG DER FIGUREN

Im Folgenden werden bevorzugte Ausführungsbeispiele beispielhaft und mit Bezug auf die folgenden Figuren beschrieben:
Fig. 1 stellt ein Ausführungsbeispiel der erfindungsgemäßen Aufwickeleinheit für ein Kabel in einer Schnittansicht dar.
Fig. 2a zeigt die Austrittsronde mit der Austrittsöffnung und dem Führungsrahmen.
Fig. 2b zeigt den Führungsrahmen in größerem Detail.
Fig. 3 zeigt verschiedene Ansichten des zweiten Wickelbereich (im Querschnitt), der Austrittsronde mit der Austrittsöffnung von vorn und von oben.
Fig. 4a zeigt den Kabelverlauf im zweiten Wickelbereich.
Fig. 4b zeigt eine Schnittansicht des austretenden Kabels aus der Austrittsöffnung mit dem Ausgleitmechanismus.
Fig. 5a zeigt die schneckenförmige Führung für das Kabel im zweiten Wickelbereich.
Fig. 5b zeigt die schneckenförmige Führung für das Kabel im Wickelbereich entlang der in Fig. 5a dargestellten Schnittebene.
Fig. 6 zeigt wie der Führungsrahmen durch die schneckenförmige Führung geführt wird.

### DETAILLIERTE BESCHREIBUNG VON AUSFÜHRUNGSBEISPIELEN

Folgende Begriffe und Ausdrücke werden in diesem Dokument genutzt:

Der Begriff "Elektrofahrzeug" beschreit jedes Fahrzeug, welches mit einem elektrischen Antrieb versehen ist. Dazu gehören E-Autos, E-Transporter, E-Motorräder, E-Motorroller und auch E-LKWs sowie elektrische Boote, Flugzeuge und elektrische Schienenfahrzeuge. Weitere elektrisch betriebene Fahrzeuge sind nicht ausgeschlossen.

Der Begriff "Innenkörper" beschreibt einen rotationssymmetrischen Körper, der sich im Inneren der Aufwickeleinheit befindet und mindestens teilweise von der Wickeleinheit umschlossen wird. Der Teil des Innenkörpers, der einen kleineren Durchmesser aufweist, kann als Gegenlager für die Wickeleinheit dienen. Zwischen beiden kann ein Kugellager, ein Doppelkugellager ein Rollenlager oder ein Gleitlager vorhanden sein. Der Innenkörper kann entweder massiv oder hohl ausgeführt werden. Falls es sich um einen hohlen Innenkörper handelt, kann dieser entweder auf einer oder auf beiden Seiten mit Deckeln verschlossen werden. Auf diese Weise können leicht Wartungsarbeiten z.B. an dem innen liegenden Elektromotor vorgenommen werden. Der schmale Teil des Innenkörpers kann als Drehachse für die Wickeleinheit dienen. Der Innenkörper kann auch einen Zapfen in der Mitte der breiteren Seite aufweisen (z.B.) auf dem Deckel, sodass er auch als Achse für die Austrittsronde dienen kann. Andere Achsführungen sind denkbar - z.B. ausgehend von einem Gehäuse der Aufwickeleinheit.

Der Begriff "Wickeleinheit" beschreibt ein im Wesentlichen rotationssymmetrisches Element der Aufwickeleinheit, die einen ersten Wickelbereich und einen zweiten Wickelbereich aufweist. Ein Kabel kann durch eine in Richtung des Innenkörpers weisende Öffnung einer Seitenwand des ersten Wickelbereiches zum zweiten Wickelbereich geführt werden.

Der Begriff "Austrittsronde" beschreibt ein ringförmiges Element mit einer Austrittsöffnung für das Kabel. Die Austrittsronde sollte einen Durchmesser haben, der mindestens die Größe des zweiten Wickelbereiches der Wickeleinheit plus z.B. einen doppelten Kabeldurchmesser aufweist. Die Austrittsronde kann auch als kreisrunde Scheibe ausgebildet sein oder einen trennbaren Innenteil aufweisen, der von einer Achse aufgenommen werden kann. Außerdem kann die Austrittsronde gegenüber einer Rotation der Wickeleinheit blockiert werden. Dies kann einerseits durch z.B. einen Blockierstift (auch manuell einführbar) oder alternativ beispielsweise elektromagnetisch aus dem Innenkörper heraus geschehen. Vorteilhafterweise kann ein Elektromagnet eine Verriegelung betätigen.

Der Begriff "Austrittsöffnung" beschreibt eine Öffnung in der Austrittsronde, durch die das Kabel herausgeschoben werden kann. Typischerweise wird das Herausschieben im Wesentlichen in nahezu tangentialer Richtung einer Oberfläche der Austrittsronde geschehen.

Der Begriff "Kabel" beschreibt ein elektrisches mehradriges Kabel, welches für eine Leistungsübertragung von mindestens 11 kW oder mindestens 16 A bei 240 V vorgesehen ist. Derartige Kabel haben typischerweise einen Durchmesser von knapp 1,5 cm (insbesondere 1,3 cm). Die Aufwickeleinheit ist allerdings auch für Kabel mit kleineren Durchmessern und auch wesentlich größeren Durchmessern auslegbar.

Der Begriff "Rotationsantriebseinheit" beschreibt eine im Wesentlichen elektrisch betriebene Einheit - wie beispielsweise einen Elektromotor mit einem zugehörigen Akku, der den Motor mit elektrischer Energie versorgen kann - sodass die Wickeleinheit gegenüber dem Innenkörper angetrieben und in Rotation versetzt werden kann.

Der Begriff "Reinigungseinheit" beschreibt eine Vorrichtung in der Nähe der Austrittsöffnung der Austrittsronde an der das Kabel vorbei oder hindurch geleitet werden kann. Die Reinigungseinheit besteht beispielsweise aus Bürsten und/oder Schwämmen, um eine Reinigung des Kabels beim Aufwickeln zu gewährleisten. Die Reinigungseinheit kann entweder direkt auf der Austrittsronde oder einem Gehäuse vorgesehen sein, welches die Aufwickeleinheit umschließt. Zusätzlich kann auch an dem ersten Wickelbereich eine Reinigungseinheit vorhanden sein. Sie kann mit dem Führungsrahmen kombiniert sein.

Es wird darauf hingewiesen, dass Merkmale bzw. Komponenten von unterschiedlichen Ausführungsformen, die mit den entsprechenden Merkmalen bzw. Komponenten der Ausführungsform nach gleich oder zumindest funktionsgleich sind, weitgehend mit den gleichen Bezugszeichen oder mit einem anderen Bezugszeichen versehen sind, welches sich lediglich in seiner ersten Ziffer von dem Bezugszeichen eines (funktional) entsprechenden Merkmals oder einer (funktional) entsprechenden Komponente unterscheidet. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen.

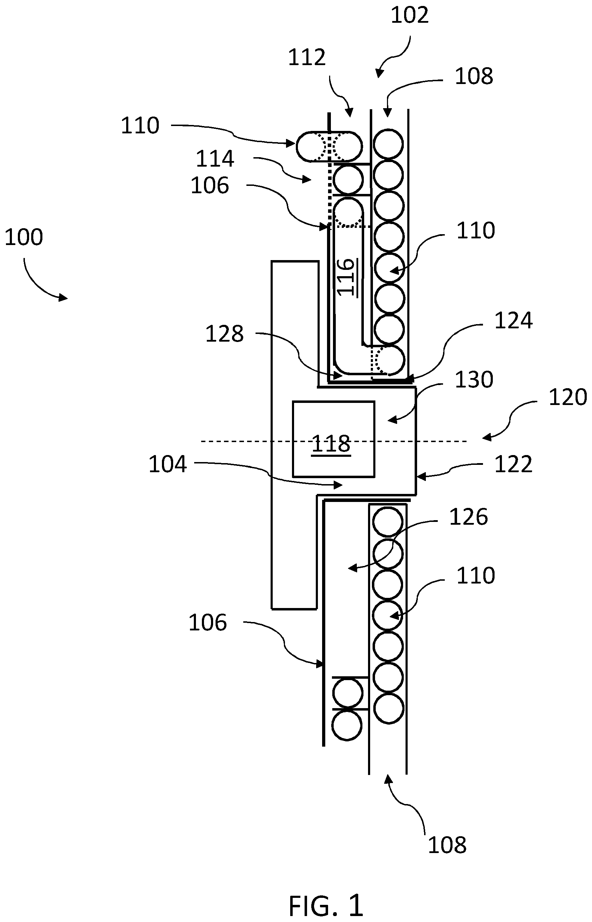

Fig. 1 stellt ein Ausführungsbeispiel der erfindungsgemäßen Aufwickeleinheit 100 für ein Kabel 110 z.B. zum Laden für ein Elektrofahrzeug in einer Schnittansicht dar. Die Aufwickeleinheit 100 weist eine rotationssymmetrische Wickeleinheit 102, die drehbar um eine Achse (nicht dargestellt) gelagert ist, einen rotationssymmetrischen Innenkörper 104, der fest mit der Achse verbunden ist, sowie eine rotationssymmetrische Austrittsronde 106 auf, die drehbar um die Achse gelagert ist.

Die Wickeleinheit 102 weist einen ersten Wickelbereich 108 einer ersten Breite auf, sodass ein Kabel 110 in den ersten Wickelbreich 108 von einem Bereich nahe der Achse übereinander aufwickelbar ist. Die Wickeleinheit weist auch einen zweiten Wickelbereich 112 in einem radialen Peripheriebereich der Wickeleinheit 102 auf, wobei der zweite Wickelbereich 112 angrenzend an den ersten Wickelbereich 108 angeordnet ist und eine zweite Breite (z.B. gleich oder ähnlich breit wie der erste Wickelbereich) aufweist, sodass das Kabel 110 in dem zweiten Wickelbereich 112 von einem Bereich, der näher an der Achse liegt übereinander in Richtung der radialen Peripherie der Austrittsronde 106 entgegen einer Wickelrichtung im ersten Wickelbereich 108 aufwickelbar (bzw. abwickelbar) ist.

Die Austrittsronde 106 dreht sich eine vorgegebene Anzahl von Umdrehungen (oder Bruchteilen davon) zusammen mit der Wickeleinheit 102 und ist dann blockierbar, sodass das Kabel 110 infolge einer Weiterdrehung der Wickeleinheit 102 aus der Austrittsöffnung 114 in einem radial peripheren Bereich der Austrittsronde 106 in Höhe des zweiten Wickelbereiches 112 herausschiebbar ist.

Außerdem ist in dem Querschnitt durch die Aufwickeleinheit 100 gut erkennbar, dass der erste Wickelbereich 108 das Kabel 110 in Lagen übereinander aufgewickelt zeigt. Zusätzlich erkennt man den Innenkörper 104 und die Austrittsronde 106, aus dessen Austrittsöffnung 114 das Kabel 110 austreten kann. In der Figur erkennt man auch, dass das Kabel in dem zweiten Wickelbereich 112 auch übereinander aufgewickelt ist, wenn mehrere Windungen vorhanden sind. Das Kabel 110 verlässt in einem unteren Bereich des Wickelbereiches 108 - also in der Nähe 128 des schmaleren Teils 130 des Innenkörpers 104 - den ersten Wickelbereich 108, um in einem Hohlraum 126 zwischen dem ersten Wickelbereich 108 und dem Innenkörper 104 über ein kurzes Verbindungsstück 116 in den zweiten Wickelbereich 112 geführt zu werden, indem es nun gegenläufig zu dem ersten Wickelbereich aufgewickelt ist.

Im Inneren des Innenkörpers 104 können ein elektrischer Antriebsmotor 118, ein Akku, ein Fernsteuerempfänger und andere Steuerungselektronik (jeweils nicht dargestellt) untergebracht werden. Außerdem kann die Elektrik bzw. Elektronik in dem Innenkörper 104 über eine Kabelverbindung in der Nähe der schematisch dargestellten Achse 120 zum Beispiel im Bereich 122 des Innenkörpers 104 aus diesem herausgeführt werden. Dies gilt sowohl für einen Ladestrom für den Akku (nicht dargestellt) als auch für notwendige Steuersignale. Außerdem ist ein Lager bzw. Gleitlager 124 zwischen der Wickeleinheit 102 und dem Innenkörper 104 dargestellt.

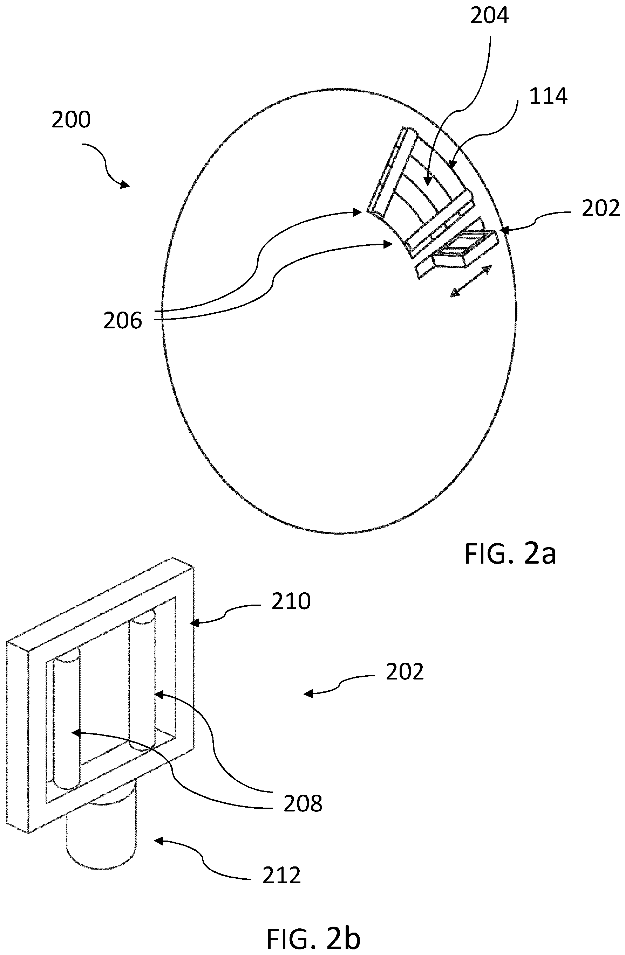

**Fig. 2a** zeigt eine perspektivische Darstellung 200 die Austrittsronde 106 mit der Austrittsöffnung 114 und dem Führungsrahmen 202. Der Doppelpfeil rechts neben dem Führungsrahmen 202 soll symbolisieren, dass sich der Führungsrahmen 202 radial verschieben lässt. Dies kann durch die schneckenförmige Führung 204, die in der Austrittsöffnung 114 erkennbar ist, unterstützt oder überhaupt erst ermöglicht werden. Zusätzlich können sich auf einer linken und auf einer rechten Seite der Austrittsöffnung 114 in der Austrittsöffnung 114 Rollen 206 (z.B. als Realisierung der Ausgleiteinheit, alternativ z.B. runde Kanten der Austrittsronde, Teflon beschichtet, o.ä.) über die gesamte Höhe der Austrittsöffnung 114 befinden, so dass ein Kabel, welches aus der Austrittsöffnung 114 austritt, sauber durch die Rollen 206 und zusätzliche Rollen das Führungsrahmen 202 geführt werden können.

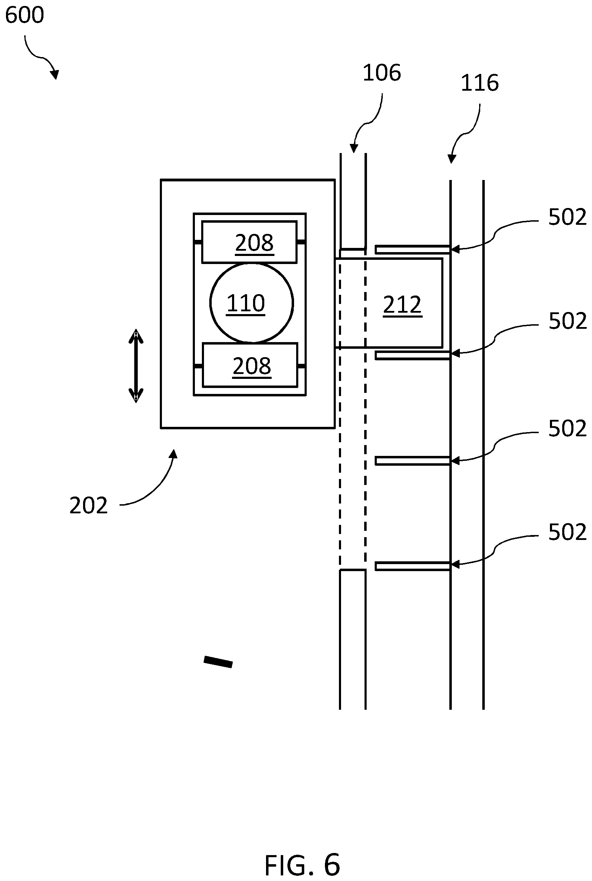

**Fig. 2b** zeigt den Führungsrahmen 202 in größerem Detail. Die Rollen 208 können durch den Rahmen 210 mittels einer Achse (nicht dargestellt) drehbar gelagert werden. Das Kabel kann dann zwischen den beiden Rollen 208 geführt werden. In einer vorteilhaften Ausführungsform können die Rollen 208 konkav gestaltet sein. Im unteren Teil des Führungsrahmen 202 befindet sich ein weiterer Führungsstift 212, der in die schneckenförmige Führung des zweiten Wickelbereich eingreifen kann (vergleiche Fig. 6), nachdem er die Austrittsronde durch einen Schlitz durchstoßen hat.

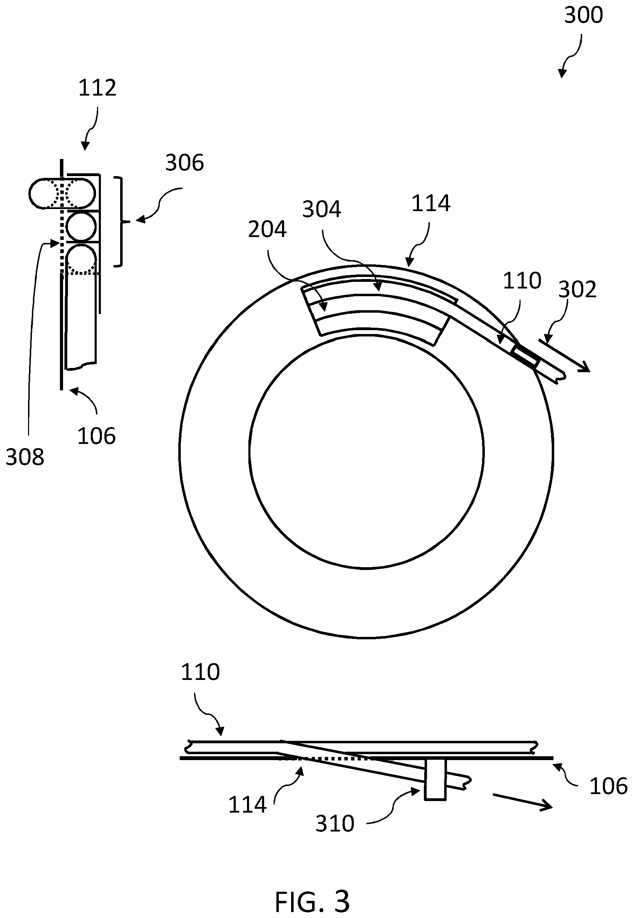

**Fig. 3** zeigt verschiedene Ansichten 300 des zweiten Wickelbereichs (im Querschnitt), der Austrittsronde 106 mit der Austrittsöffnung 114 von vorn und von oben (hier ohne die Rollen 206 dargestellt). Man erkennt, die Austrittsronde 106, aus der das Kabel 110 in Pfeilrichtung 302 herausgeschoben bzw. auch - in umgekehrter Richtung - wieder eingezogen werden kann. Das Kabel 110 wird hier gerade aus der obersten Führungsrille 304 der schneckenförmigen Führung 204 herausgeschoben. Erkennbar sind im dargestellten Beispiel drei Wicklungen im zweiten Wickelbereich vorgesehen. Es können aber auch mehr oder weniger sein. Das kann auch von der Kabeldicke abhängig gemacht werden.

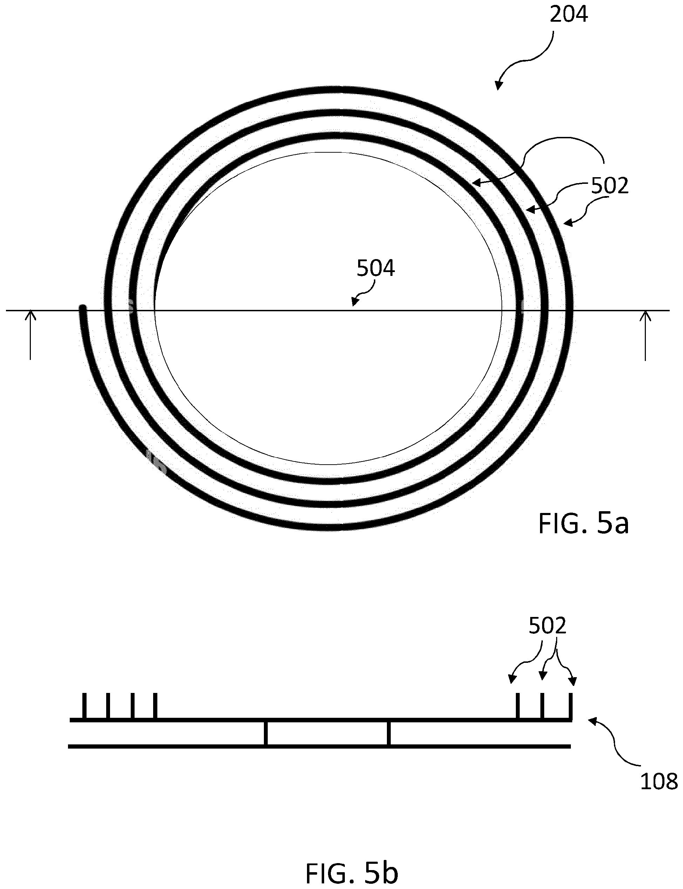

Die Teilfigur oben links stellt nochmals drei übereinanderliegende Wicklungen 306 im zweiten Wickelbereich dar. Zwischen den Wicklungen des Kabels 110 ist der Führungssteg 204 (bzw. eine schneckenförmige durchgehende Führungswand 502 bzw. Steg, vgl. Fig. 5) erkennbar.

Im unteren Teil von Fig. 3 (Schnitt von oben) ist dargestellt, wie das Kabel 110 aus der Austrittsöffnung 114 aus dem zweiten Wickelbereich der Austrittsronde 106 herausgeschobene wird (vgl. Pfeil). Es kann durch eine Führung bzw. den Führungsrahmen 202 und/oder alternativ durch einen Reinigungseinheit 310 und/oder die Ausgleiteinheit 206 (hier nicht dargestellt) geführt werden.

Man erkennt auch deutlich, wie das Kabel 110 quasi tangential über den zweiten Wickelbereich aus der Austrittsöffnung 114 herausgeschoben werden kann. Die Reinigungseinheit 310, durch die das Kabel 110 hindurchgeführt werden kann, kann sicherstellen, dass sich im Inneren der Aufwickeleinheit immer ein gereinigtes Kabel 110 befindet.

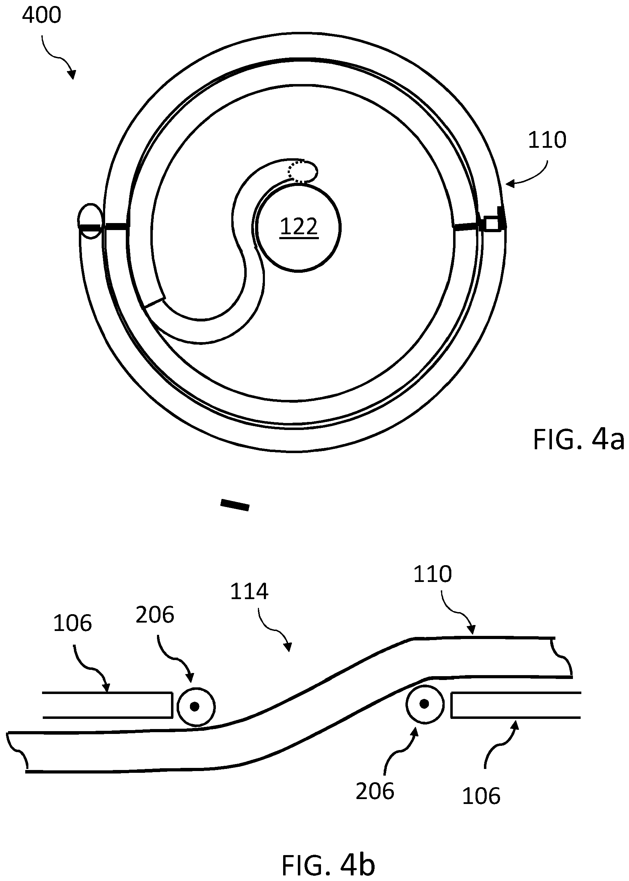

In **Fig. 4a** ist dargestellt (400), wie das Kabel 110 von dem ersten Wickelbereich in der Nähe 128 des schmaleren Teils 122 des Innenkörpers 104 in dem Bereich zwischen dem ersten Wickelbereich (nicht dargestellt) und dem zweiten Wickelbereich geführt ist, sodass sich in dem ersten Wickelbereich und dem zweiten Wickelbereich eine gegenläufige Wickelrichtung ergibt.

**Fig. 4b** zeigt nochmals einen Querschnittsdraufsicht auf den Kabelauftritt durch den Bereich der Austrittsöffnung 114 der Austrittsronde 106. Deutlich zu erkennen sind auch die Rollen 206 in Seitenbereichen des Austrittsöffnung 114, durch die das Kabel 110 sauber geführt werden kann, ohne an Öffnungskanten der Austrittsöffnung 114 zu scheuern.

**Fig. 5a** zeigt den Führungssteg (vgl. 308 Fig. 3) bzw. die Wand 502 der schneckenförmigen Führungsstruktur 204 für das Kabel 110 (nicht dargestellt) im zweiten Wickelbereich in einer Draufsicht.

**Fig. 5b** zeigt eine Seitenschnittansicht einer Schnittansicht der schneckenförmigen Führungsstruktur 204 durch die Schnittebene 504 im zweiten Wickelbereich 108. Auch hier sind die Wände 502 gut erkennbar.

**Fig. 6** zeigt eine Detailansicht 600 des Führungsrahmens 202, der in einer Oberfläche der Austrittsronde 106 in Pfeilrichtung verschiebbar ist. Die Verschiebung in Pfeilrichtung ergibt sich durch ein Drehen des zweiten Wickelbereiches 112 gegenüber der Austrittsronde 106 und die Führung des Führungsstiftes 212 des Führungsrahmens 202 durch die durchgehende Wand 502 der schneckenförmigen Führung. Nach einer kompletten Drehung des zweiten Wickelbereiches 112 würde der Führungsstiftes 212 in der Mitte der drei Bereiche der schneckenförmigen Führung 204 dargestellt werden müssen. Damit der Gleitmechanismus 202 mit dem Führungsstift 212 nicht herausfällt, kann einen zusätzliche Nut im Bereich des Führungsstiftes 212 vorgesehen sein, der in der Austrittsronde 106 gleitet (oder ähnlich).

Außerdem sei darauf hingewiesen, dass das Kabel 110 nur zwischen den Rollen des Führungsrahmens 202 dargestellt ist. Auf eine Darstellung des Kabels 110 in der schneckenförmigen Führung wurde verzichtet.

Die Beschreibung der verschiedenen Ausführungsbeispiele der vorliegenden Erfindung wurde zum besseren Verständnis dargestellt, dient aber nicht einer unmittelbaren Einschränkung der erfinderischen Idee auf diese Ausführungsbeispiele. Weitere Modifikationen und Variationen innerhalb des Schutzbereichs der Ansprüche erschließt sich der Fachmann selbst. Die hier genutzte Terminologie wurde so gewählt, um die grundsätzlichen Prinzipien der Ausführungsbeispiele am besten zu beschreiben und sie dem Fachmann leicht zugänglich zu machen.

Die dargestellten Strukturen, Materialien, Abläufe und Äquivalente aller Mittel und/oder Schritte mit zugehörigen Funktionen in den untenstehenden Ansprüchen sind dazu gedacht, alle Strukturen, Materialien oder Abläufe anzuwenden, wie es durch die Ansprüche ausgedrückt ist.

Zusammenfassend bleibt festzustellen: Es wird eine Aufwickeleinheit für ein Kabel - im Wesentlichen eine Kabeltrommel - vorgestellt, deren Austrittsronde teilweise gegen ein Mitdrehen mit der Wickeleinheit blockiert werden kann, sodass ein Kabelende aus der Austrittsöffnung herausgeschoben wird. Das andere Ende des Kabels wird gleichzeitig von einem ersten Wickelbereich der Wickeleinheit abgewickelt. Eine jeweilige Reinigungseinheit im Bereich von Austrittsöffnungen zum Beispiel eines Gehäuses der Aufwickeleinheit sorgt dafür, dass nur gesäubertes Kabel in der Aufwickeleinheit aufgewickelt wird. Das Auf- und Abwickeln kann elektrisch angetrieben geschehen.

### Bezugszeichenliste:

- 100: Wickeleinheit Aufwickeleinheit
- 102: Wickeleinheit
- 104: Innenkörper
- 106: Austrittsronde
- 108: erster Wickelbereich
- 110: Kabel
- 112: zweiter Wickelbereich
- 114: Austrittsöffnung
- 116: kurzes Verbindungsstück
- 118: Antriebsmotor
- 120: symbolische Achse
- 122: schmaler Bereich des Innenkörpers
- 124: Lager bzw. Gleitlager
- 126: Hohlraum zwischen dem ersten Wickelbereich und dem Innenkörper
- 128: Nähe des schmaleren Teils des Innenkörpers
- 130: schmaler Teil des Innenkörpers
- 200: perspektivische Darstellung die Austrittsronde
- 202: Führungsrahmen
- 204: schneckenförmige Führung
- 206: Ausgleiteinheit / Rolle
- 208: Rolle des Gleitmechanismus
- 210: Rahmen
- 212: Führungsstift
- 300: verschiedene Ansichten der Austrittsronde
- 302: Austrittsrichtung des Kabels
- 304: oberste Führungsrille
- 306: übereinanderliegende Wicklungen
- 308: Führungssteg(e)
- 310: Reinigungseinheit
- 400: Darstellung der gegenläufigen Wicklung des Kabels
- 502: Führungssteg
- 504: Schnittebene
- 600: Detailansicht des Führungsrahmens an der Austrittsronde

## Patentansprüche

1. Eine Aufwickeleinheit (100) für ein Kabel, die Aufwickeleinheit (100) umfassend
- eine rotationssymmetrische Wickeleinheit (102), die drehbar um eine Achse gelagert ist,
- einen rotationssymmetrischen Innenkörper (104), der fest mit der Achse verbunden ist,
wobei die Wickeleinheit (102) einen ersten Wickelbereich (108) einer ersten Breite aufweist, sodass ein Kabel (110) in den ersten Wickelbreich (108) von einem Bereich nahe der Achse übereinander aufwickelbar ist,
**dadurch gekennzeichnet, dass**
die Aufwickeleinheit (100) eine rotationssymmetrische Austrittsronde (106), die drehbar um die Achse (120) gelagert ist, aufweist,
dass die Wickeleinheit (102) einen zweiten Wickelbereich (112) in einem radialen Peripheriebereich der Wickeleinheit (102) aufweist, wobei der zweite Wickelbereich (112) angrenzend an den ersten Wickelbereich (108) angeordnet ist und eine zweite Breite aufweist, sodass ein Kabel (110) in dem zweiten Wickelbereich (112) von einem Bereich nahe dem ersten Wickelbereich (108) übereinander gegenläufig zu einer Wickelrichtung im ersten Wickelbereich (108) aufwickelbar ist, und
dass die Austrittsronde (106) für eine vorgegebene Anzahl von Umdrehungen zusammen mit der Wickeleinheit (102) drehbar und dann blockierbar ist, sodass ein Kabel (110) infolge einer Weiterdrehung der Wickeleinheit (102) aus einer Austrittsöffnung (114) in einem radial peripheren Bereich der Austrittsronde (106) in Höhe des zweiten Wickelbereiches (112) herausschiebbar ist.

2. Die Aufwickeleinheit (100) gemäß Anspruch 1, zusätzlich aufweisend
- ein Kabel (110) mit einem Kabeldurchmesser, das sich von dem ersten Wickelbereich (108) zwischen diesem und dem Innenkörper in den zweiten Wickelbereich (112) und aus der Austrittsöffnung (114) erstreckt.

3. Die Aufwickeleinheit (100) gemäß Anspruch 2, wobei das Kabel (110) in einem aufgewickelten Zustand mit einem ersten Abschnitt in dem ersten Wickelbereich (102) aufgewickelt ist und mit seinem zweiten Abschnitt auf den zweiten Wickelbereich (112) gegenläufig aufgewickelt ist.

4. Die Aufwickeleinheit (100) gemäß Anspruch 3, wobei der erste Abschnitt länger als der zweite Abschnitt ist.

5. Die Aufwickeleinheit (100) gemäß Anspruch 2 bis 4, wobei die erste Breite dem Kabeldurchmesser plus einer Toleranzbreite, die kleiner als die Kabelbreite ist, entspricht.

6. Die Aufwickeleinheit (100) gemäß Anspruch 2 bis 4, wobei die erste Breite breiter als der Kabeldurchmesser ist.

7. Die Aufwickeleinheit (100) gemäß Anspruch 2 bis 6, wobei die zweite Breite mindestens dem Kabeldurchmesser entspricht.

8. Die Aufwickeleinheit (100) gemäß Anspruch 2 bis 7, wobei das Kabel (110) für eine Stromleistung von mindestens 11 kW ausgelegt ist,
und/oder wobei der Kabeldurchmesser mindesten 11 mm beträgt.

9. Die Aufwickeleinheit (100) gemäß einem der vorangegangenen Ansprüche, wobei die Wickeleinheit (102) drehbar auf einem ersten Bereich des Innenkörpers (104) gelagert ist.

10. Die Aufwickeleinheit gemäß einem der vorangegangenen Ansprüche, wobei der Innenkörper (104) hohl ist und eine Rotationsantriebseinheit für die Aufwickeleinheit (100) aufweist.

11. Die Aufwickeleinheit (100) gemäß Anspruch 10, wobei die Rotationsantriebseinheit einen Motor aufweist, der die Wickeleinheit (102) gegenüber dem Innenkörper (104) antreibt, vorzugsweise wobei der Innenkörper (104) einen Akku zum Betrieb des Motors beherbergt.

12. Die Aufwickeleinheit gemäß Anspruch 11, wobei der Motor von außerhalb des Innenkörpers (104) schaltbar ist,
und/oder
wobei der Motor ferngesteuert schaltbar ist.

13. Die Aufwickeleinheit (100) gemäß einem der Ansprüche 10 bis 12, wobei eine Verriegelung zwischen der Austrittsronde (106) und der Wickeleinheit (108) und/oder dem Innenkörper elektromagnetisch aus dem Innenkörper (104) auslösbar ist,
und/oder
wobei eine Verriegelung zwischen der Austrittsronde (106) und der Wickeleinheit (108) und/oder dem Innenkörper mechanisch auslösbar ist.

14. Die Aufwickeleinheit (100) gemäß einem der vorangegangenen Ansprüche, wobei sich in der Austrittsöffnung (114) mindestens eine Ausgleiteinheit (206) befindet, vorzugsweise wobei die Ausgleiteinheit (206) aus mindestens einer ersten Rolle besteht.

15. Die Aufwickeleinheit (100) gemäß einem der Ansprüche 2 bis 14, wobei sich im Bereich der Austrittsöffnung (114) ein Führungsrahmen (202) auf einer Außenseite der Austrittsronde (106) befindet, durch den sich das Kabel (110) erstreckt, vorzugsweise wobei der zweite Wickelbereich (112) eine schneckenförmige Führung (204) aufweist, in der das Kabel aufwickelbar ist, und der Führungsrahmen (202) in einem Schlitz in der Austrittsronde (106) verschiebbar ist, wobei eine Führungsvorrichtung des Führungsrahmen (202), die sich in den zweiten Wickelbereich (112) hinein erstreckt, den Führungsrahmen (202) durch die schneckenförmige Führung (204) im Schlitz bei einer Drehung des zweiten Wickelbereiches (112) bewegt.

## Claims

1. A winding-up unit (100) for a cable, the winding-up unit (100) comprising
- a rotationally symmetric winding unit (102) that is rotatably mounted about an axis,
- a rotationally symmetric inner body (104) that is fixed to the axis,
wherein the winding unit (102) includes a first winding region (108) having a first width, so that a cable (110) is windable in layers into the first winding region (108) from a region near the axis,
**characterized in that**,
that the winding-up unit (100) includes a rotationally symmetric exit roundel (106), that is rotatably mounted about the axis (120),
that the winding unit (102) includes a second winding region (112) in a radially peripheral region of the winding unit (102), wherein the second winding region (112) is arranged adjacent to the first winding region (108) and has a second width, so that a cable (110) is windable in layers in the second winding region (112) from a region near the first winding region (108) counter-wound to a winding direction in the first winding region (108), and
that the exit roundel (106) is rotatable for a predetermined number of revolutions together with the winding unit (102) and then lockable, so that a cable (110) as a result of further rotation of the winding unit (102) is pushable out of an exit opening (114) in a radially peripheral region of the exit roundel (106) at the level of the second winding region (112).

2. The winding-up unit (100) according to claim 1, further comprising
o a cable (110) with a cable diameter, that extends from the first winding region (108) between the first winding region and the inner body into the second winding region (112) and out of the exit opening (114).

3. The winding-up unit (100) according to claim 2, wherein the cable (110) in a wound state is wound with a first section in the first winding region (102) and is counter-wound with its second section onto the second winding region (112).

4. The winding-up unit (100) according to claim 3, wherein the first section is longer than the second section is.

5. The winding-up unit (100) according to claims 2 to 4, wherein the first width corresponds to the cable diameter plus a tolerance width, that is smaller than the cable width.

6. The winding-up unit (100) according to claims 2 to 4, wherein the first width is wider than the cable diameter is.

7. The winding-up unit (100) according to claims 2 to 6, wherein the second width corresponds to at least the cable diameter.

8. The winding-up unit (100) according to claims 2 to 7, wherein the cable (110) is designed for a power of at least 11 kW,
and/or wherein the cable diameter is at least 11 mm,
and/or wherein the cable diameter is at least 11 mm.

9. The winding-up unit (100) according to one of the preceding claims, wherein the winding unit (102) is rotatably mounted on a first region of the inner body (104).

10. The winding-up unit according to one of the preceding claims, wherein the inner body (104) is hollow and includes a rotation drive unit for the winding-up unit (100).

11. The winding-up unit (100) according to claim 10, wherein the rotation drive unit includes a motor that drives the winding unit (102) relative to the inner body (104),
preferably
wherein the inner body (104) houses a battery for operating the motor.

12. The winding-up unit according to claim 11, wherein the motor is switchable from outside the inner body (104),
and/or
wherein the motor is remotely switchable.

13. The winding-up unit (100) according to one of claims 10 to 12, wherein a locking mechanism between the exit roundel (106) and the winding unit (108) and/or the inner body is electromagnetically triggerable from the inner body (104),
and/or
wherein a locking mechanism between the exit roundel (106) and the winding unit (108) and/or the inner body is mechanically triggerable.

14. The winding-up unit (100) according to one of the preceding claims, wherein at least one run-out unit is located in the exit opening (114),
preferably
wherein the run-out unit (206) consists of at least a first roller.

15. The winding-up unit (100) according to one of claims 2 to 14, wherein, in the
region of the exit opening (114), a guide frame (202) is provided on an outer side of the exit roundel (106), through which the cable (110) extends, preferably
wherein the second winding region (112) includes a helical guide (204), in which the cable is windable, and the guide frame (202) is displaceable in a slot in the exit roundel (106),
wherein a guide device of the guide frame (202), which extends into the second winding region (112), moves the guide frame (202) through the helical guide (204) in the slot upon rotation of the second winding region (112).

## Revendications

1. Unité d'enroulement (100) pour un câble, l'unité d'enroulement (100) comprenant
- une unité d'enroulement à symétrie de révolution (102) qui est montée de manière rotative autour d'un axe,
- un corps interne à symétrie de révolution (104) qui est fixé à l'axe,
dans laquelle l'unité d'enroulement (102) comprend une première région d'enroulement (108) ayant une première largeur, de sorte qu'un câble (110) peut être enroulé en couches dans la première région d'enroulement (108) à partir d'une région proche de l'axe,
**caractérisée en ce que**
l'unité d'enroulement (100) comprend une rondelle de sortie à symétrie de révolution (106) qui est montée de manière rotative autour de l'axe (120),
que l'unité d'enroulement (102) comprend une deuxième zone d'enroulement (112) dans une zone périphérique radiale de l'unité d'enroulement (102), dans laquelle la deuxième zone d'enroulement (112) est disposée à proximité de la première zone d'enroulement (108) et présente une deuxième largeur, de sorte qu'un câble (110) peut être enroulé en couches dans la deuxième zone d'enroulement (112) à partir d'une région proche de la première zone d'enroulement (108) en sens inverse du sens d'enroulement dans la première zone d'enroulement (108), et
que la rosace de sortie (106) peut tourner d'un nombre prédéterminé de tours avec l'unité d'enroulement (102), puis être verrouillée, de sorte qu'un câble (110) puisse être poussé hors d'une ouverture de sortie (114) dans une zone périphérique radiale de la rondelle de sortie (106) au niveau de la deuxième zone d'enroulement (112) à la suite d'une rotation supplémentaire de l'unité d'enroulement (102).

2. L'unité d'enroulement (100) selon la revendication 1, comprenant en outre un câble (110) d'un certain diamètre, qui s'étend depuis la première zone d'enroulement (108) entre la première zone d'enroulement et le corps interne dans la deuxième zone d'enroulement (112) et hors de l'ouverture de sortie (114).

3. L'unité d'enroulement (100) selon la revendication 2, dans laquelle le câble (110) à l'état enroulé est enroulé avec une première section dans la première zone d'enroulement (102) et est contre-enroulé avec sa deuxième section sur la deuxième zone d'enroulement (112).

4. L'unité d'enroulement (100) selon la revendication 3, dans laquelle la première section est plus longue que la deuxième section.

5. L'unité d'enroulement (100) selon les revendications 2 à 4, dans laquelle la première largeur correspond au diamètre du câble plus une largeur de tolérance, qui est inférieure à la largeur du câble.

6. L'unité d'enroulement (100) selon les revendications 2 à 4, dans laquelle la première largeur est supérieure au diamètre du câble.

7. L'unité d'enroulement (100) selon les revendications 2 à 6, dans laquelle la deuxième largeur correspond au moins au diamètre du câble.

8. L'unité d'enroulement (100) selon les revendications 2 à 7, dans laquelle le câble (110) est conçu pour une puissance d'au moins 11 kW,
et/ou dans laquelle le diamètre du câble est d'au moins 11 mm,
et/ou dans laquelle le diamètre du câble est d'au moins 11 mm.

9. L'unité d'enroulement (100) selon l'une des revendications précédentes, dans laquelle l'unité d'enroulement (102) est montée de manière rotative sur une première région du corps interne (104).

10. L'unité d'enroulement selon l'une des revendications précédentes, dans laquelle le corps interne (104) est creux et comprend une unité d'entraînement en rotation pour l'unité d'enroulement (100).The winding-up unit according to one of the preceding claims, wherein the inner body (104) is hollow and includes a rotation drive unit for the winding-up unit (100).

11. The winding-up unit (100) according to claim 10, wherein the rotation drive unit includes a motor that drives the winding unit (102) relative to the inner body (104),
preferably
wherein the inner body (104) houses a battery for operating the motor.

12. L'unité d'enroulement (100) selon la revendication 10, dans laquelle l'unité d'entraînement en rotation comprend un moteur qui entraîne l'unité d'enroulement (102) par rapport au corps interne (104),
de préférence dans laquelle le corps interne (104) loge une batterie pour faire fonctionner le moteur.

13. L'unité d'enroulement (100) selon l'une des revendications 10 à 12, dans laquelle un mécanisme de verrouillage entre le rond de sortie (106) et l'unité d'enroulement (108) et/ou le corps interne peut être déclenché électromagnétiquement à partir du corps interne (104),
et/ou
dans lequel un mécanisme de verrouillage entre la rondelle de sortie (106) et l'unité d'enroulement (108)
et/ou
le corps interne peut être déclenché mécaniquement.

14. L'unité d'enroulement (100) selon l'une des revendications précédentes, dans laquelle au moins une unité de sortie est située dans l'ouverture de sortie (114),
de préférence
dans laquelle l'unité de sortie (206) se compose d'au moins un premier rouleau.

15. L'unité d'enroulement (100) selon l'une des revendications 2 à 14, dans laquelle, dans la région de l'ouverture de sortie (114), un cadre de guidage (202) est prévu sur un côté extérieur de la rosace de sortie (106), à travers lequel s'étend le câble (110),
de préférence
dans lequel la deuxième zone d'enroulement (112) comprend un guide hélicoïdal (204), dans lequel le câble peut être enroulé, et le cadre de guidage (202) est déplaçable dans une fente dans la rosace de sortie (106), dans lequel un dispositif de guidage du cadre de guidage (202), qui s'étend dans la deuxième zone d'enroulement (112), déplace le cadre de guidage (202) à travers le guide hélicoïdal (204) dans la fente lors de la rotation de la deuxième zone d'enroulement (112).
